## Europäisches Patentamt
## European Patent Office
## Office européen des brevets

(19)

(11) Veröffentlichungsnummer: **0 141 052**
**B1**

(12) # EUROPÄISCHE PATENTSCHRIFT

(45) Veröffentlichungstag der Patentschrift:
**17.12.86**

(21) Anmeldenummer: **84108659.8**

(22) Anmeldetag: **21.07.84**

(51) Int. Cl.⁴: **B 65 G 67/06**

(54) Verfahren zum Befüllen von Kesselfahrzeugen, insbesondere mit Schüttgut wie Zement.

(30) Priorität: **10.09.83 DE 3332749**

(43) Veröffentlichungstag der Anmeldung:
**15.05.85 Patentblatt 85/20**

(45) Bekanntmachung des Hinweises auf die Patenterteilung:
**17.12.86 Patentblatt 86/51**

(84) Benannte Vertragsstaaten:
**AT BE CH DE FR GB IT LI LU NL SE**

(56) Entgegenhaltungen:
**DE-A-2 705 084**
**FR-A-2 155 871**
**US-A-4 403 281**

(73) Patentinhaber: **IBAU HAMBURG**
**Ingenieurgesellschaft Industriebau mbH,**
**Amsinckstrasse 45, D-2000 Hamburg 1 (DE)**

(72) Erfinder: **Klein- Albenhausen, Heinrich, Leinpfad**
**33, D-2000 Hamburg (DE)**

(74) Vertreter: **von Raffay, Vincenz, Dipl.- Ing.,**
**Patentanwälte Raffay, Fleck & Partner Postfach**
**32 32 17, D-2000 Hamburg 13 (DE)**

## Beschreibung

Die Erfindung betrifft ein Verfahren nach dem Oberbegriff des Anspruches 1. Ein derartiger Befüllungsverfahren ist aus der DE-A- 2 705 084 bekannt.

Bisher werden in allen Lose-Verlade-Anlagen die Füllrüssel entweder durch Längs- oder Querverfahreinrichtungen vom Fahrer des Silofahrzeuges oder von der naheliegenden Schaltwarte aus per Hand mittels elektrischer Steuereinrichtungen über den Füllstutzen positioniert, oder die Füllrüssel sind stationär eingebaut und der Fahrer muß sein Fahrzeug möglichst genau unter den Füllrüssel bringen, damit das Füllgut vollständig in die Füllöffnung eingebracht werden kann.

Nachteilig macht sich jedoch beim Ausrichten des Füllstutzens bemerkbar, daß dieses relativ zeit- und damit lohnintensiv ist, da nicht auf Bedienungspersonal verzichtet werden kann. Ein weiterer Nachteil liegt darin, daß bei ungenauem Ausrichten häufig das Füllgut verschüttet wird, was dann ein Säubern der gesamten Verladestelle erforderlich macht. Auch ist die Haltbarkeit der Füllrüssel ebenso wie die staubfreie Füllung im wesentlichen vom exakten Aufsetzen des Füllrüssels auf die Füllöffnung abhängig. Das mehr oder weniger ungenaue Ausrichten durch das Bedienungspersonal führt zu entsprechenden Schäden.

Der Erfindung liegt nun die Aufgabe zugrunde, ein Verfahren der eingangs genannten Art zu schaffen, welches das Ausrichten des Füllrüssels mit der Füllöffnung automatisch und genau durchführt und durch Verzicht auf Bedienungspersonal wirtschaftlicher arbeitet.

Diese Aufgabe wird nach einem Verfahren nach Anspruch 1 durch das Kennzeichen des Anspruches 1 gelöst.

Wenn der Füllrüssel lediglich in einer Richtung verfahrbar ist, genügt ein Detektor zur Durchführung des erfindungsgemäßen Verfahrens (Anspruch 2). Wenn der Füllrüssel mit zwei Freiheitsgraden in der waagerechten Ebene allseitig verfahrbar ist, so sind mindestens zwei Detektoren zur Durchführung des erfindungsgemäßen Verfahrens erforderlich (Anspruch 3).

Das erfindungsgemäße Verfahren setzt mindestens eine Sucheinrichtung ein, die im wesentlichen durch einen Detektor bestimmt ist, bei dem es sich um einen Reflektionstaster, eine Fernsehkamera, eine Fotozelle oder dgl. Einrichtung handeln kann, die dann ein Signal erzeugt, wenn sie über den Rand der Füllöffnung fährt, d.h. wenn sie auf den Dunkelbereich der Füllöffnung trifft, der durch die Tiefe des Kesselinneren bestimmt ist. Da die Füllöffnungen normalerweise kreisförmig sind, ist es mit Hilfe des Rechners möglich, aus den von dem Detektor ermittelten Anfangs- und Endpunkten der Kreissehne, die senkrecht zur Sehne liegende Mittelachse der Füllöffnung und deren Lage zum Startpunkt zu ermitteln. Wenn der Füllrüssel beispielsweise bei Schienenfahrzeugen nur in Längsrichtung der Schienenfahrzeuge verfahrbar ist, genügt wie gesagt, ein Detektor, da der Füllrüssel von vornherein auf einer Linie bewegbar ist, die durch den Mittelpunkt der Füllöffnung geht.

Wenn der Füllrüssel auch noch seitlich und damit allseitig in der waagerechten Ebene bewegbar ist - dieses ist beispielsweise bei Straßenfahrzeugen häufig der Fall, die nicht so genau aufgestellt werden können - dann sind mindestens zwei Detektoren erforderlich, wobei lediglich sichergestellt sein muß, daß beide bei ihrer Bewegung vom Startpunkt aus über die Füllöffnung fahren.

Eine Bewegung auf einem Durchmesser, d.h. auf einer Geraden durch den Mittelpunkt ist hierbei nicht erforderlich. Unter Berücksichtigung der Tatsache, daß der Abstand zwischen den beiden Detektoren bekannt ist, und die Länge von zwei Sehnen der kreisförmigen Füllöffnung gemessen werden, kann der Rechner den Mittelpunkt ermitteln und den Füllrüssel entsprechend positionieren.

Die Vorrichtung zur Durchführung des erfindungsgemäßen Verfahrens ist entsprechend ausgestaltet.

Im folgenden wird die Erfindung unter Hinweis auf die Zeichnung anhand eines Ausführungsbeispieles näher erläutert.

Es zeigt:

Fig. 1 eine perspektivische Draufsicht auf eine Füllanlage mit Kesselfahrzeug zur Durchführung des erfindungsgemäßen Verfahrens; und

Fig. 2 ein Koordinatensystem mit kreisrunder Füllöffnung mit den Parametern zur Durchführung des Verfahrens das mit mindestens zwei Detektoren arbeitet.

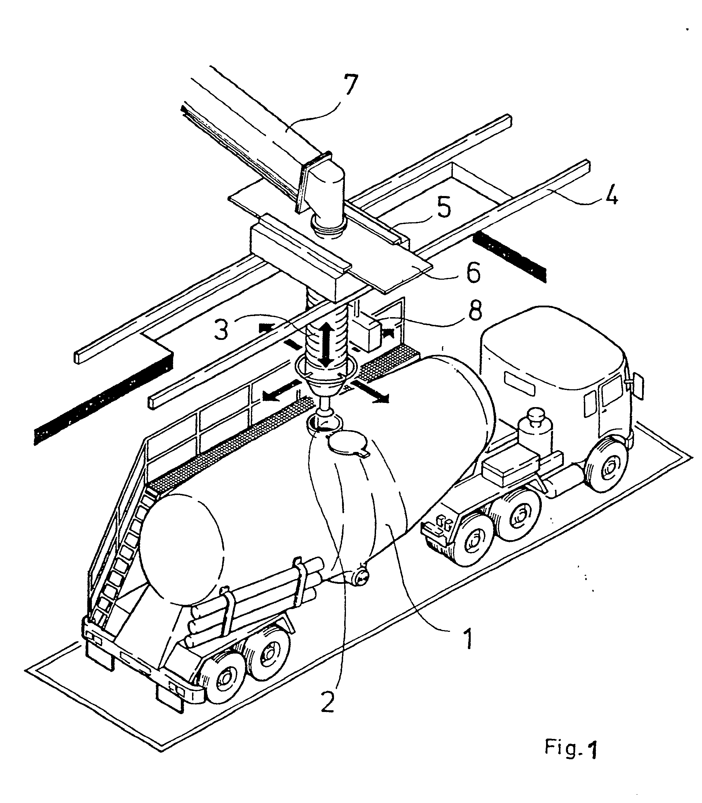

In Fig. 1 ist im wesentlichen eine bekannte Füllanlage dargestellt, die einen allseitig in der waagerechten Ebene verfahrbaren Rüssel 3 aufweist. Dieser Rüssel ist zur Anpassung an die Höhe eines Kesselfahrzeuges 1 auch noch auf- und abfahrbar. Die einzelnen Freiheitsgrade sind durch Pfeile angedeutet.

Der Kesselwagen 1 ist mit einer kreisrunden Füllöffnung versehen. Er kann auch mehrere derartige kreisrunde Füllöffnungen aufweisen, die durch den Füllrüssel 3 dann nacheinander angesteuert werden können. Es sind auch solche Anlagen bekannt, die mehr als einen Füllrüssel aufweisen. Dann können jeweils etsprechend der Anzahl der Füllrüssel mehrere Füllöffnungen gleichzeitig angesteuert werden.

Der Füllrüssel ist auf einer Schiene 4 in Längsrichtung des Kesselfahrzeuges 1 mit Hilfe eines Schlittens 5 bewegbar. Eine Querbewegung wird durch einen Schieber 6 ermöglicht, der in den Schlitten 5 entsprechend geführt ist. Die Zuführung des Füllguts erfolgt durch einen Förderer 7.

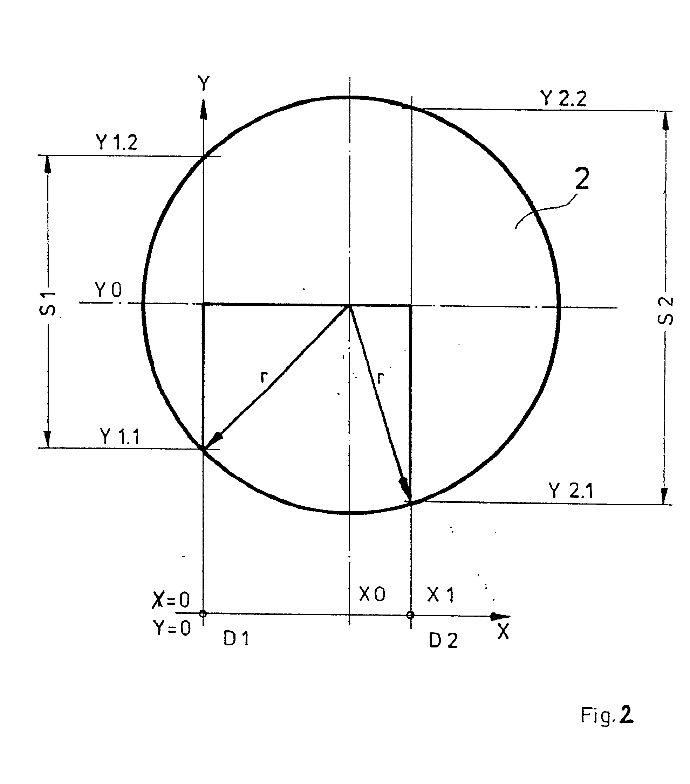

Mit 8 ist eine Sucheinrichtung bezeichnet, die bei dem dargestellten Ausführungsbeispiel zwei Detektoren $D_1$ und $D_2$ Fig. 2 aufweist. Bei dieser Ausführungsform sind zwei Detektoren vorhanden, da der Rüssel, wie gesagt, in der waagerechten Ebene allseitig bewegbar ist. Dieses ist insbesondere dann notwendig, wenn es sich um Straßenfahrzeuge handelt, die nicht so genau aufgestellt werden können, wie beispielsweise Schienenfahrzeuge.

Die Sucheinrichtung S ist lediglich so angeordnet, daß die beiden in Verfahrrichtung der Sucheinrichtung in einem festen Abstand nebeneinander liegenden Detektoren bei der Bewegung der Sucheinrichtung über die Füllöffnung 2 bewegt werden.

Im folgenden wird die rechnerische Grundlage zur Ermittlung des Mittelpunktes in Verbindung mit der Fig. 2 und den dort verwendeten Koordinatenbezeichnungen erläutert.

Beim Überfahren der Füllöffnung durch die beiden Detektoren $D_1$ und $D_2$ auf irgendeiner beliebigen Sehne des durch die Füllöffnung 2 definierten Kreises werden die Anfangs- und Endpunkte von zwei Sehnen ermittelt:

$$S_1 = Y_{1,2} - Y_{1,1}$$
$$S_2 = Y_{2,2} - Y_{2,1}$$

Der Rechner ermittelt daraus den Abstand

$$Y_O = Y_{1,1} + \frac{Y_{1,2} - Y_{1,1}}{2} = Y_{2,1} + \frac{Y_{2,2} - Y_{2,2}}{2}$$

des Mittelpunktes vom Koordinatenursprung (Startpunkt). Der Abstand zwischen den Detektoren beträgt $X_1 = $ Konstant. Durch Anwendung des pythagoreischen Lehrsatzes läßt sich die Beziehung

$$r^2 = \frac{S_1^2}{4} + X_O^2 = \frac{S_2^2}{4} + (X_1 - X_O)^2$$

aufstellen, der Rechner ermittelt daraus den Abstand $X_0$ des Mittelpunktes vom Koordinatenursprung ( = Startpunkt).

$$X_O = \frac{X_1}{2} + \frac{S_2 - S_1^2}{8X_1}$$
$$= K_1 + \frac{S_2^2 - S_1^2}{K_2}$$

$$X_1 = \text{Konst.}$$

Mit den Koordinaten $X_0$ und $Y_0$ läßt sich die Beladeeinrichtung positionieren.

Wenn der Füllrüssel lediglich in Längsrichtung bewegbar ist, da von vornherein festliegt, daß diese Bewegung durch den Mittelpunkt der Füllung erfolgt, so ist die Sucheinrichtung entsprechend einfacher aufgebaut, da hier ein Detektor genügt. Dieser Detektor bewegt sich von vornherein auf der Mittellinie der Füllöffnung und damit durch den Mittelpunkt. Durch Messung der Punkte $Y_1$ und $Y_2$ kann der Mittelpunkt auf einfache Weise ermittelt werden.

Wie gesagt, können zur Ertastung der Füllöffnung die unterschiedlichsten Einrichtungen eingesetzt werden. Auch ist es möglich, unmittelbar vor der Füllöffnung Reflektoren auf dem Kesselvagen anzubringen, oder diesen Bereich zu beleuchten, um einen möglichst abrupten "Hell-Dunkel"-Übergang zu schaffen, der dann mit entsprechender Sicherheit das erwünschte Signal zur Festlegung der Koordinaten auslöst.

Wenn die Sucheinrichtung S durch ein oder mehrere Detektoren den Mittelpunkt festgestellt hat, ist es ohne Schwierigkeiten möglich, den Füllrüssel 3 in diesem Mittelpunkt zu bewegen und so ein genaues automatisches Positionieren ohne Hilfe von Bedienungspersonal durchzuführen.

Es ist ohne weiteres verständlich, daß nacheinander mehrere Füllöffnungen von einem Füllrüssel angefahren werden können. Es ist auch möglich, daß eine Anlage von vornherein mit zwei oder mehreren Füllrüsseln ausgerüstet ist, die dann entsprechend gleichzeitig durch zugeordnete Sucheinrichtungen mit Detektoren auf unterschiedliche Füllöffnungen positioniert werden können.

Wenn Straßenkesselfahrzeuge gefüllt werden sollen, so werden diese, wie gesagt, nicht sehr genau aufgestellt. Es muß daher sichergestellt werden, daß immer zwei Detektoren über eine Füllöffnung gefahren werden und zwar so, daß die in Fahrrichtung der Detektoren verlaufende Mittellinie der kreisförmigen Füllöffnung zwischen diesen Detektoren liegt, ungefähr so wie in Fig. 2 dargestellt. Zu diesem Zweck können mehr als zwei Detektoren senkrecht zur Fahrrichtung der Sucheinrichtung nebeneinander liegen, um auf jeden Fall sicherzustellen, daß unabhängig von der Aufstellung des Kesselfahrzeuges und unabhängig von der Lage der Füllöffnungen, immer zwei Detektoren so über die ausgewählte Füllöffnung gefahren werden, daß die entsprechende Mittellinie zwischen ihnen liegt, so daß entsprechende Anfangs- und Endpunkte ermittelt werden, wie es in Verbindung mit Fig. 2 erläutert wurde. Die Detektoren, die diese Bedingung nicht erfüllen, d.h. links und rechts neben der Füllöffnung vorbeigefahren werden oder von denen mehr als zwei auf einer Seite der Mittellinie liegen, werden automatisch abgeschaltet bzw. vom Rechner icht berüksichtigt.

Wenn beispielsweise der Abstand zwischen sämtlichen nebeneinander liegenden Detektoren kleiner oder gleich dem größtmöglichen Füllöffnungsdurchmesser ist, dann ist sichergestellt, daß mindestens zwei Detektoren über eine Füllöffnung gefahren werden. Liegen jedoch zwei Detektoren auf einer Seite der Mittellinie, dann ist aufgrund dieses "geringen" Abstandes sichergestellt, daß auf der anderen Seite auf jeden Fall noch ein dritter Detektor liegt. Dann wird der eine Detektor von den zweien, die auf einer Seite der Mittellinie liegen, abgeschaltet oder die von ihm ermittelten Werte bleiben unberücksichtigt. Wichtig ist in der Praxis nur, daß so viele Detektoren nebeneinander angeordnet sind, daß auf jeden Fall die Füllöffnung in der beschriebenen Weise überfahren wird, wobei die seitlichen Abweichungen der Füllöffnung von einem theoretischen Mittelwert, bedingt durch Aufstellung des Kesselfahrzeuges und bedingt durch unterschiedliche Anordnung im oberen Teil des Kessels, berücksichtigt werden müssen. Soweit in der Beschreibung und insbesondere in den Ansprüchen von zwei Detektoren gesprochen wird, sind es diejenigen, die über die Füllöffnung gefahren werden und von denen je einer auf je einer Seite der in Bewegungsrichtung verlaufenden Mittellinie liegt.

Einfacher sind die Verhältnisse, wie gesagt, wenn beispielsweise bei Schienenfahrzeugen von vorneherein sichergestellt werden kann, daß die Sucheinrichtung mit dann nur einem Detektor von vorneherein auf der Mittellinie verfahren werden kann. Geringe Abweichungen hiervon, die für die praktische Positionierung keine Rolle spielen, bleiben selbstverständlich außer Betracht.

## Patentansprüche

1. Verfahren zum Befüllen von Kesselfahrzeugen (1), insbesondere mit Schüttgut wie Zement, mit einer oder mehreren kreisförmigen Füllöffnung(en) (2) mit Hilfe eines Füllrüssels (3), der in waagerechter Ebene verfahren wird, dadurch gekennzeichnet, daß mindestens ein Detektor (D) - ausgehend von einem Startpunkt (Koordinatensprung) - über die Füllöffnung (2) gefahren wird, dabei die Koordinaten (X, Y) von Anfang und Ende der Füllöffnung (2) ermittelt und diese an einen Rechner gibt, der den Kreismittelpunkt der Füllöffnung (2) errechnet und den Füllrüssel (3) unter Berücksichtigung seines Fahrweges vom Startpunkt und seines Abstands zum Detektor (D) auf den Kreismittelpunkt der Füllöffnung (2) positioniert.

2. Verfahren nach Anspruch 1 zum Befüllen von Schienenfahrzeugen, bei dem der Füllrüssel (3) nur in einer waagerechten Richtung durch den Kreismittelpunkt der Füllöffnung (2) verfahrbar ist, dadurch gekennzeichnet, daß ausschließlich ein Detektor (D) über den Kreismittelpunkt der Füllöffnung (2) gefahren und somit der Durchmesser der Füllöffnung (2) ermittelt wird.

3. Verfahren nach Anspruch 1 zum Befüllen von Straßenfahrzensen, bei dem der Füllrüssel (3) in waagerecher Ebene allseitig verfahrbar ist, dadurch gekennzeichnet, daß zwei einen festen Abstand untereinander aufweisende Detektoren (D) über die Fulloffnung (2) gefahren werden und dabei die jeweiligen Koordinaten (X, Y) von Anfang und Ende zweier Kreissehnen der Füllöffnung (2) ermitteln, wobei die in Fahrrichtung der Detektoren (D) verlanfende Mittelinie der Kreisförmige Füllöffnung (2) zwischen diesen Detektoren (D) liegt.

## Claims

1. Method for filling tanker vehicles (1) particularily with bulk materials such as cement, having one or more cirular filling opening(s) (2) and using a filling pipe (3), which is movable in a horizontal plane, characterized in that - starting from a starting point (origin of the coordinates) - at least one detector (D) is moved over the center of the filling opening (2), the starting and end coordinates (x,y) of filling opening (2) are determined and these are supplied to a computer, which calculates the circle center point of the filling opening (2) and positions the filling pipe (3) over the circular center point of the filling opening (2) whilst taking an account of the dictance travelled from the starting point and the distance thereof from the detector (D).

2. Method according to claim 1 for filling railway vehicles, in which the filling pipe (3) is only movable through the circle center point of the filling opening (2) in a horizontal direction, characterized in that, only one detector (D) is moved over the circle center point of the filling opening (2) to determine the diameter of the filling opening (2).

3. Method according to claim 1 for filling road vehicles in which the filling pipe (3) is in the horizontal plane movable in all directions, characterized in that, two detectors (D) having a fixed spacing from one another are moved over the filling opening (2) to determine the starting and end coordinates (x,y) of two circular chords of the filling opening (2), whereby the center line of the circular filling opening (2), which runs in the direction of movement of the dectors (D) is positioned between said detectors (D).

## Revendications

1. Procédé de remplissage de véhicules à chaudière (1), en particulier de matières en vrac telles que du ciment, avec un ou plusieurs orifices de remplissage (2) circulaires à l'aide d'une trompe de remplissage (3) qui se déplace dans le plan horizontal, caractérisé en ce qu'au moins un détecteur (D) détecte les coordonnées (X, Y) du début et de la fin de l'orifice de remplissage (2) en se déplaçant au-dessus de l'orifice de remplissage (2) en partant d'un point de départ (saut de coordonnées) et les transmet a un ordinateur qui calcule le centre de cercle de l'orifice de remplissage (2) et qui positionne la trompe de remplissage (3) sur le centre de cercle de l'orifice de remplißsage (2) en tenant compte de son déplacement depuis le point de départ et de sa distance par rapport au détecteur (D).

2. Procédé selon la revendication 1 pour remplir des véhicules sur rails, dans lequel la trompe de remplissage (3) n'est mobile que dans un sens horizontal à travers le centre de cercle de l'orifice de remplissage (2), caractérisé en ce que seul un détecteur (D) se déplace audessus du centre de cercle de l'orifice de remplissage (2) et que le diamètre de l'orifice de remplissage (2) est ainsi détecté.

3. Procédé selon la revendication 1 pour remplir des véhicules routiers, dans lequel la trompe de remplissage (3) est mobile dans le plan horizontal de tous côtés, caractérisé en ce que deux détecteurs (D) présentant un écart fixe entre eux se déplacent au-dessus de l'orifice de remplissage (2) et détectent ainsi les coordonnées respectives (X, Y) du début et de la fin de deux cordes de cercle de l'orifice de remplissage (2), l'axe de l'orifice de remplissage (2) circulaire qui se trouve dans le sens de déplacement des détecteurs (D) étant situé entre ces détecteurs (D).

Fig. 1

Fig. 2